# EUROPÄISCHE PATENTSCHRIFT

(11) **EP 4 028 599 B1**
(45) Veröffentlichungstag und Bekanntmachung des Hinweises auf die Patenterteilung: **16.08.2023**
(21) Anmeldenummer: 20775208.0
(22) Anmeldetag: 09.09.2020
(51) Int. Cl.: E02F 3/40, E02F 3/96, A01G 23/087

(54) **GREIFER**
GRIPPER
ÉLÉMENT DE PRÉHENSION

(30) Priorität: 11.09.2019 AT 507902019
(43) Veröffentlichungstag der Anmeldung: 20.07.2022
(73) Patentinhaber: Steininger, Werner, 4722 Peuerbach (AT)
(72) Erfinder: Steininger, Werner, 4722 Peuerbach (AT)
(74) Vertreter: KLIMENT & HENHAPEL
(86) Internationale Anmeldenummer: PCT/EP2020/075243
(87) Internationale Veröffentlichungsnummer: WO 2021/048233

(56) Entgegenhaltungen:
- DE-A1-102015 206 027
- DE-U1-202018 100 191
- US-A1- 2018 220 599

## Beschreibung

Die vorliegende Erfindung bezieht sich auf einen Greifer mit zumindest zwei zangenartig an einem Basisteil relativ zueinander beweglich angeordneten Greiferarmen und einer Schneideinrichtung für Schnittgut zur Befestigung an einer Arbeitsmaschine, wobei die Schneideinrichtung von einer Schneidplatte gebildet wird, die mithilfe einer Kolben-Zylindereinheit von einer aktiven Stellung, in der die Schneidplatte in einen von den Greiferarmen umschlossenen Aufnahmeraum für das Schnittgut ragt, in eine inaktive Stellung, in der die Schneidplatte im Basisteil eingezogen ist, bewegbar ist, wobei die Schneidplatte um eine erste, zur Schneidplatte senkrechte Schwenkachse am Basisteil schwenkbar gelagert ist, und der Zylinder der Kolben-Zylindereinheit um eine zweite, zur ersten Schwenkachse parallele Schwenkachse schwenkbar am Basisteil gelagert ist, gemäß dem Oberbegriff von Anspruch 1.

Der erfindungsgemäße Greifer mit einer Schneideinrichtung für Schnittgut ist insbesondere zur Befestigung an Baggern, Traktoren oder anderen Arbeitsmaschinen vorgesehen. Vorrichtungen der genannten Art werden dabei vor allem für die Holzernte verwendet, wobei der Greifer Teil eines Auslegerarms einer Arbeitsmaschine ist, oder an ihm befestigt ist, vorzugsweise über einen Schnellwechsler. Die Bedienperson kann von einer Bedienkanzel der Arbeitsmaschine den Auslegerarm so steuern, dass die am Basisteil des Greifers angeordneten Greiferarme das Schnittgut umfassen, wobei in weiterer Folge über eine entsprechende Hydraulik ein Schließdruck auf die Greiferarme ausgeübt wird, die über eine zangenartige Bewegung das Schnittgut ergreifen und fixieren. Als Schnittgut sind unter anderem Buschwerk, dünne Baumstämme, aber auch dicke, ausgewachsene Baumstämme vorgesehen. Der Greifer dient dabei zur Handhabung des Schnittguts, beispielsweise zum Sortieren oder zur Verladung von bereits geschnittenem Schnittgut. Da es während der Handhabung des Schnittguts mitunter auch erforderlich ist das Schnittgut zuzuschneiden, gibt es auch Ausführungen, bei denen der Greifer mit einer Schneideinrichtung in Form einer Schneidplatte versehen ist, die mithilfe einer Kolben-Zylindereinheit von einer aktiven Stellung, in der die Schneidplatte in einen von den Greiferarmen umschlossenen Aufnahmeraum für das Schnittgut ragt, in eine inaktive Stellung, in der die Schneidplatte im Basisteil eingezogen ist und daher auch nicht schneidend wirkt, bewegbar ist. Die Bedienperson kann daher wahlweise durch Betätigung der Kolben-Zylindereinheit die Schneideinrichtung in ihre aktive Stellung bringen, in der die Schneidplatte in den Aufnahmeraum der Greiferarme ragt. Werden die Greiferarme geschlossen und der Aufnahmeraum somit verengt, wird das im Aufnahmeraum gehaltene Schnittgut gegen eine Schneide der Schneidplatte gedrückt und durchtrennt. Nach dem Schnitt kann das Schnittgut weiter sortiert oder auf einen Lastkraftwagen oder ähnliches verladen werden. Um den Greifer wieder vornehmlich zum Sortieren oder zur Verladung von bereits geschnittenem Schnittgut zu verwenden, kann die Schneidplatte durch Betätigung der Kolben-Zylindereinheit wieder in ihre inaktive Stellung bewegt werden, in der die Schneidplatte im Basisteil eingezogen ist und somit nicht mehr in den Aufnahmeraum der Greiferarme ragt. Ein Greifer dieser Art wird zum Beispiel in Dokument DE 10 2015 206027 A offenbart.

Auf die Schneidplatte wirken dabei im Zuge eines durch Betätigung der Greiferarme ausgeführten Schnittvorganges hohe Belastungen, die von der Schneidplatte sowie ihren Lagern aufgenommen und abgeführt werden müssen. Die gewünschte Beweglichkeit der Schneidplatte zwischen einer aktiven und einer inaktiven Stellung erschwert dabei die Auslegung des Greifers für eine solche hohe mechanische Belastbarkeit. Bei herkömmlichen Ausführungen werden die auf die Schneidplatte wirkenden Kräfte entweder über die Kolbenstange der Kolben-Zylindereinheit abgeleitet, und/oder über Gleit- oder Rolllager der Schneidplatte. Die Kolben-Zylindereinheit muss daher entsprechend groß dimensioniert werden, wodurch aber Gewicht und Größe des Greifers entsprechend erhöht werden. Das widerspricht der grundsätzlichen Anforderung den Greifer möglichst klein und leicht auszuführen, um dessen Beweglichkeit zu erhöhen und den Energieverbrauch für seinen Einsatz zu verringern. Auch die Nachrüstung des Greifers mit einer Schneideinrichtung wird mit zunehmender Größe und Gewicht der Schneideinrichtung zunehmend unattraktiv. Werden die auf die Schneidplatte wirkenden Kräfte über die Gleit- oder Rolllager der Schneidplatte abgeleitet, unterliegen diese Lager großem Verschleiß, sodass sich die Lebensdauer der Schneideinrichtung stark reduziert.

Es ist daher das Ziel der Erfindung einen Greifer mit einer Schneideinrichtung für Schnittgut zur Befestigung an einer Arbeitsmaschine so zu verbessern, dass die Belastbarkeit der Schneideinrichtung erhöht und ihr Verschleiß entsprechend verringert werden, wobei der Greifer dennoch kompakt ausgeführt werden kann. Vorzugsweise soll auch eine Nachrüstbarkeit der Schneideinrichtung für einen Greifer verwirklichbar sein.

Diese Ziele werden durch die Merkmale von Anspruch 1 erreicht. Anspruch 1 bezieht sich hierbei auf einen Greifer mit zumindest zwei zangenartig an einem Basisteil relativ zueinander beweglich angeordneten Greiferarmen und einer Schneideinrichtung für Schnittgut zur Befestigung an einer Arbeitsmaschine, wobei die Schneideinrichtung von einer Schneidplatte gebildet wird, die mithilfe einer Kolben-Zylindereinheit von einer aktiven Stellung, in der die Schneidplatte in einen von den Greiferarmen umschlossenen Aufnahmeraum für das Schnittgut ragt, in eine inaktive Stellung, in der die Schneidplatte im Basisteil eingezogen ist, bewegbar ist, wobei die Schneidplatte um eine erste, zur Schneidplatte senkrechte Schwenkachse am Basisteil schwenkbar gelagert ist, und der Zylinder der Kolben-Zylindereinheit um eine zweite, zur ersten Schwenkachse parallele Schwenkachse schwenkbar am Basisteil gelagert ist. Erfindungsgemäß wird dabei vorgeschlagen, dass die ein- und ausfahrbare Kolbenstange der Kolben-Zylindereinheit mit der Schneidplatte über einen Mitnehmerbolzen verbunden ist, der in der aktiven Stellung der Schneidplatte bei Belastung der Schneidplatte an einem Widerlager des Basisteils anliegt, wobei der Mitnehmerbolzen über Kugellager in einer Kulissenführung des Basisteils geführt ist, deren lichter Querschnitt sich im Bereich des Widerlagers zur Sicherstellung einer Beabstandung der Kugellager von der führenden Kurvenbahn der Kulissenführung bei Anlage des Mitnehmerbolzens am Widerlager erweitert. Die auf die Schneidplatte wirkenden Kräfte werden somit weder über die Kolbenstange noch über die Gleit- oder Rolllager abgeführt, sondern hauptsächlich über einen Mitnehmerbolzen, der in der aktiven Stellung der Schneidplatte direkt an einem Widerlager des Basisteils anliegt und die Kräfte daher unmittelbar auf den Basisteil überträgt. Restkräfte der Belastung werden über das Schwenklager für die erste Schwenkachse der Schneidplatte abgeführt, die aber klein sind. Der Großteil der Belastungen auf die Schneidplatte wirkt als ein um die erste Schwenkachse wirkendes Drehmoment, das vom Mitnehmerbolzen und seiner direkten Anlage auf das Widerlager des Basisteils abgeführt wird.

Der Mitnehmerbolzen erfüllt somit erfindungsgemäß im Wesentlichen zwei Aufgaben. Einerseits überträgt er die Bewegung der Kolbenstange der Kolben-Zylindereinheit auf die Schneidplatte, wobei die Schneidplatte am Basisteil um eine erste Schwenkachse schwenkbar gelagert ist. Die Kolben-Zylindereinheit ist um eine zweite, zur ersten Schwenkachse parallele Schwenkachse schwenkbar am Basisteil gelagert. Die lineare Ausstell- und Rückstellbewegung der Kolbenstange wird somit über den Mitnehmerbolzen in eine Schwenkbewegung der Schneidplatte um die erste Schwenkachse umgesetzt, wobei sich die Kolben-Zylindereinheit um die zweite Schwenkachse mitbewegt. Eine baulich sehr kompakte Ausführung kann etwa dadurch erreicht werden, indem die erste und die zweite Schwenkachse nahe aneinander angeordnet werden und die Kolben-Zylindereinheit im Bereich einer Randkante der Schneidplatte, sodass sich die Kolben-Zylindereinheit im Zuge ihrer Stellbewegung in der Bewegungsebene der Schneidplatte bewegt.

Zudem erfüllt der Mitnehmerbolzen auch die Funktion eines Lagers, indem er in der aktiven Stellung der Schneidplatte an einem Widerlager des Basisteils anliegt. Die Kolben-Zylindereinheit ist somit lediglich für den Vollzug der Schwenkbewegung der Schneidplatte sowie für den Haltepunkt der Schneidplatte in ihrer aktiven und inaktiven Stellung vorgesehen, ohne dabei aber Schneidkräfte aufnehmen zu müssen, und kann daher entsprechend klein dimensioniert werden. Die im Zuge eines Schnittvorganges auf die Schneidplatte wirkenden Kräfte werden hingegen über den Mitnehmerbolzen direkt auf das Basisteil abgeleitet, sodass auch Gleit- oder Rolllager der Schneidplatte entlastet werden können.

Erfindungsgemäß ist nämlich vorgesehen, dass der Mitnehmerbolzen über Kugellager in einer Kulissenführung des Basisteils geführt ist, deren lichter Querschnitt sich im Bereich des Widerlagers zur Sicherstellung einer Beabstandung der Kugellager von der führenden Kurvenbahn der Kulissenführung bei Anlage des Mitnehmerbolzens am Widerlager erweitert. Im Zuge der Schwenkbewegung der Schneidplatte von ihrer inaktiven Stellung in ihre aktive Stellung gleitet der Mitnehmerbolzen mittels der Kugellager zunächst an einer führenden Kurvenbahn der Kulissenführung und erreicht in der aktiven Stellung der Schneidplatte einen Endabschnitt der Kulissenführung mit erweitertem lichten Querschnitt, wo der Mitnehmerbolzen mit seinem Bolzenmantel oder mittels am Bolzenmantel angeordneter Distanzringe am Widerlager anliegt und die führende Kurvenbahn der Kulissenführung sich von den Kugellagern des Mitnehmerbolzens geringfügig entfernt. Dadurch wird sichergestellt, dass bei Belastung des Mitnehmerbolzens im Zuge eines Schnittvorganges die Kugellager des Mitnehmerbolzens zur Gänze entlastet werden. Bei einer Rückstellbewegung gerät das Kugellager wieder in Anlage mit der gegenüberliegenden Kurvenführungsbahn der Kulissenführung und sorgt für ein annähernd reibungsloses und von der Kulissenführung geführtes Zurückgleiten des Mitnehmerbolzens in die inaktive Stellung der Schneidplatte.

Da die Schneidplatte im Zuge eines Schnittvorganges nicht nur durch Kräfte belastet wird, die in der Schneidplattenebene wirken, sondern auch durch Normal- und Scherkräfte, ist es vorteilhaft die Schneidplatte zwischen zwei Führungsplatten anzuordnen, die am Basisteil befestigt sind. Eine besonders kompakte bauliche Ausführung sieht dabei vor, dass die Schneidplatte zwischen zwei Führungsplatten des Basisteils angeordnet ist, die zwei einander zugewandte, parallele Führungsebenen für die Schneidplatte definieren, wobei die Führungsplatten in ihrem jeweiligen zentralen Bereich einen Durchbruch für den Bewegungsweg der Kolben-Zylindereinheit aufweisen. Die Anordnung der beiden Führungsplatten sowie deren Beabstandung ist dabei so gewählt, dass sie eine Führung der Schneidplatte im Zuge ihrer Schwenkbewegung sowie eine Stützung der Schneidplatte im Zuge des Schnittvorganges ermöglichen, indem sie keine oder nur sehr geringe Auslenkungen der Schneidplatte senkrecht zur Schneidplattenebene erlauben.

Bei einer solchen baulichen Ausführung kann das Widerlager einfach dadurch verwirklicht werden, indem die Kulissenführung zunächst mittels zweier Kulissenrahmen gebildet wird, die jeweils an einer der beiden Führungsplatten übereinander liegend befestigt oder angeformt sind und jeweils einen Endabschnitt mit erweitertem lichten Querschnitt aufweisen, wobei das Widerlager durch Randkanten der Führungsplatten gebildet wird, die in einer senkrecht zu den Führungsplatten orientierten Sichtrichtung den erweiterten lichten Querschnitt der Kulissenrahmen verengen. In der aktiven Stellung der Schneidplatte liegt der Mitnehmerbolzen somit an Randkanten der Führungsplatten an, und die Kugellager sind im Endabschnitt der beiden außen liegenden Kulissenrahmen der Kulissenführung mit jeweils erweitertem lichten Querschnitt freigestellt. Während der Ausstell- und Rückstellbewegung der Kolbenstange kann sich der Mitnehmerbolzen hingegen ungestört von den Führungsplatten innerhalb der Kulissenführung bewegen und an den führenden Kurvenbahnen der Kulissenführung abgleiten.

Eine besonders platzsparende Ausführung kann verwirklicht werden, indem die dem Aufnahmeraum zugewandte Schneide der Schneidplatte und eine rückwärtige Randkante der Schneidplatte in einem spitzen Winkel zueinander verlaufen, dessen Scheitel im Bereich der ersten Schwenkachse liegt, und in ihren der ersten Schwenkachse abgewandten Bereichen über eine bogenförmige Randkante ineinander übergehen. Vorzugsweise ist hierbei die Kolben-Zylindereinheit so angeordnet, dass die Längsachse der Kolben-Zylindereinheit im Wesentlichen parallel zur rückwärtigen Randkante der Schneidplatte verläuft.

Eine bevorzugte Ausführung des Mitnehmerbolzens sieht vor, dass der Mitnehmerbolzen an einem freien Ende der Kolbenstange der Kolben-Zylindereinheit befestigt ist, wobei der Mitnehmerbolzen mit seiner Längsachse senkrecht zur Schneidplatte orientiert ist und in einen hakenförmigen Fortsatz der Schneidplatte eingreift.

Die erfindungsgemäße Ausführung der Schneideinrichtung kann kompakt und in flacher Bauweise ausgeführt werden, sodass sie auch nachträglich an einen Greifer montiert werden kann. Es wird daher vorgeschlagen, dass die Schneideinrichtung als Nachrüstteil des Greifers ausgeführt ist. Die Komponenten der Schneideinrichtung umfassend die Schneidplatte, die Kolben-Zylindereinheit mit dem Mitnehmerbolzen, die Führungsplatten und die Kulissenführung werden hierfür von einer gemeinsamen Abdeckung oder einem Gehäuse aufgenommen, wobei die Abdeckung oder das Gehäuse als separates Bauteil am Basisteil des Greifers montierbar ist. Nach dem Anschluss einer Hydraulikleitung für die Kolben-Zylindereinheit ist die Schneideinrichtung einsetzbar.

Die Erfindung wird in weiterer Folge anhand eines Ausführungsbeispiels mithilfe der beiliegenden Figuren näher erläutert. Es zeigen hierbei die
- Fig. 1: eine perspektivische Ansicht für einen Schnitt entlang der Schnittebene B-B der Fig. 4b eines erfindungsgemäßen Greifers mit einer Schneideinrichtung in der inaktiven Stellung von unten gesehen,
- Fig. 2: eine perspektivische Ansicht eines erfindungsgemäßen Greifers mit einer Schneideinrichtung in der inaktiven Stellung von oben gesehen,
- Fig. 3: eine perspektivische Ansicht für einen Schnitt entlang der Schnittebene G-G der Fig. 8b eines erfindungsgemäßen Greifers mit einer Schneideinrichtung in der aktiven Stellung von unten gesehen,
- Fig. 4a: eine Schnittansicht gemäß der Schnittebene B-B der Fig. 4b für einen erfindungsgemäßen Greifer mit einer Schneideinrichtung in der inaktiven Stellung,
- Fig. 4b: eine Seitenansicht eines erfindungsgemäßen Greifers mit einer Schneideinrichtung in der inaktiven Stellung,
- Fig. 5: eine Detailansicht von "Detail N" der Fig. 4a,
- Fig. 6: eine Schnittansicht gemäß der Schnittebene J-J der Fig. 4a für einen erfindungsgemäßen Greifer mit einer Schneideinrichtung in der inaktiven Stellung,
- Fig. 7: eine Detailansicht von "Detail K" der Fig. 6,
- Fig. 8a: eine Schnittansicht gemäß der Schnittebene G-G der Fig. 8b für einen erfindungsgemäßen Greifer mit einer Schneideinrichtung in der aktiven Stellung,
- Fig. 8b: eine Seitenansicht eines erfindungsgemäßen Greifers mit einer Schneideinrichtung in der aktiven Stellung,
- Fig. 9: eine Detailansicht von "Detail M" der Fig. 8a,
- Fig. 10a: eine Schnittansicht gemäß der Schnittebene A-A der Fig. 10b für einen erfindungsgemäßen Greifer mit einer Schneideinrichtung in der aktiven Stellung,
- Fig. 10b: eine Seitenansicht eines erfindungsgemäßen Greifers mit einer Schneideinrichtung in der aktiven Stellung,
- Fig. 11: eine Schnittansicht gemäß der Schnittebene D-D der Fig. 10a für einen erfindungsgemäßen Greifer mit einer Schneideinrichtung in der aktiven Stellung, und die
- Fig. 12: eine Detailansicht von "Detail L" der Fig. 10a.

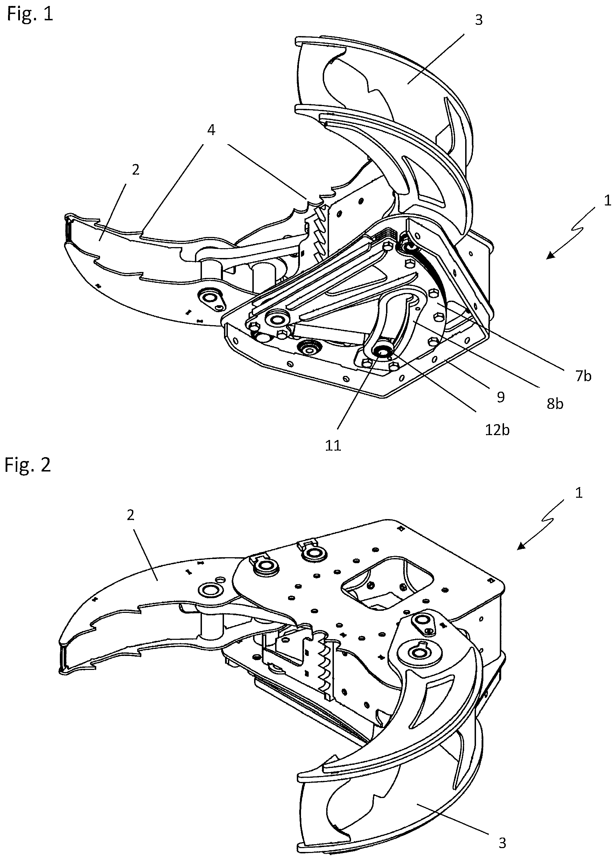

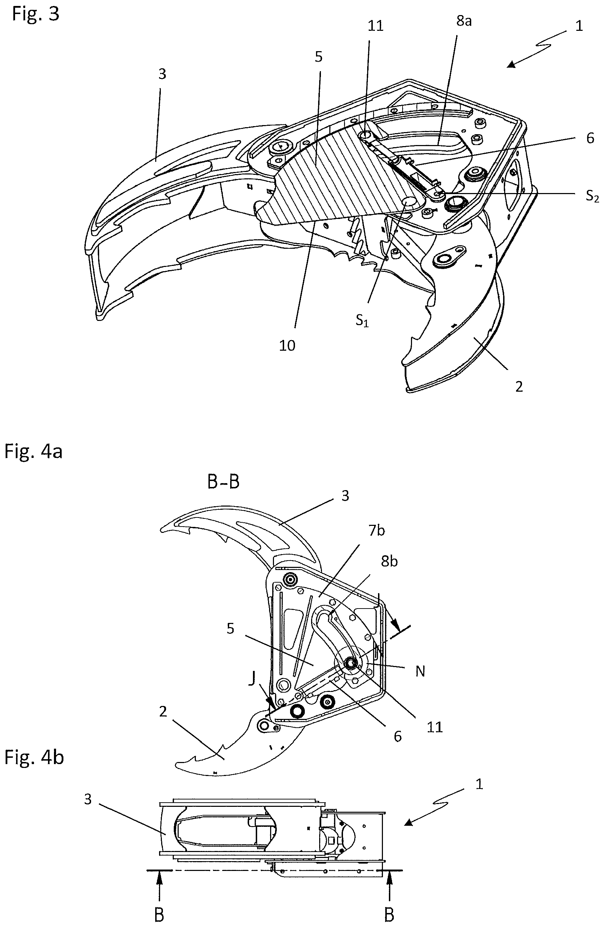

Zunächst wird auf die Fig. 1-3 Bezug genommen, die einen erfindungsgemäßen Greifer mit einer Schneideinrichtung in der inaktiven Stellung (Fig. 1 und 2) sowie in der aktiven Stellung (Fig. 3) zeigen. Die Schneideinrichtung ist dabei am unteren Ende eines Basisteils 1 angeordnet. An der Vorderseite des Basisteils 1 sind zwei zangenartig am Basisteil 1 relativ zueinander beweglich angeordnete Greiferarme 2, 3 vorgesehen. Die beiden Greiferarme 2, 3 werden vorzugsweise mit an sich bekannten hydraulischen Mitteln mit Schließdruck beaufschlagt, um das Schnittgut in einem zwischen ihnen liegenden Aufnahmeraum fest zu umfassen und festzuhalten. Beim Schließen der Greiferarme 2, 3 um das Schnittgut bewegen sich die Greiferarme 2, 3 aufeinander zu.

Beim hydraulischen Öffnen der Greiferarme 2, 3 bewegen sich die Greiferarme 2, 3 voneinander weg, um das Schnittgut freizugeben. Die Greiferarme 2, 3 sowie der Basisteil 1 sind an ihrer, dem aufzunehmenden Schnittgut zugewandten Seite abschnittsweise mit einer Oberfläche ausgeführt, die zahnförmige Fortsätze 4 aufweist. Werden die Greiferarme 2, 3 um das Schnittgut mit Schließdruck geschlossen, verkrallen sich die zahnförmigen Fortsätze 4 im Schnittgut, um die Fixierung des Schnittguts zu verstärken.

An der Rückseite des Basisteils 1 ist eine nicht näher dargestellte Anschlussvorrichtung vorgesehen. Die Anschlussvorrichtung dient zur Befestigung des Basisteils 1 an einer Arbeitsmaschine, etwa dem Auslegerarm eines Baggers oder einer anderen Arbeitsmaschine, die die Anschlussvorrichtung aufnehmen kann und über den Basisteil 1 das Gewicht des Schnittguts tragen kann. Über die Anschlussvorrichtung erfolgt auch der Anschluss der Hydraulikleitungen zur Steuerung der Greiferarme 2, 3 und der Schneideinrichtung.

Die Schneideinrichtung kann auch als Nachrüstteil ausgeführt sein und ist in diesem Fall am unteren Ende eines Basisteils 1 beispielsweise mittels Schraubverbindungen befestigt. Die Schneideinrichtung umfasst eine Schneidplatte 5, sowie eine Kolben-Zylindereinheit 6, die die Schneidplatte 5 bewegt, zwei Führungsplatten 7a, 7b für die Schneidplatte 5, sowie zwei äußere Kulissenrahmen 8a, 8b einer Kulissenführung 8. Die Schneideinrichtung kann des Weiteren eine am Basisteil 1 befestigte Abdeckung 9 aufweisen, die die Schneideinrichtung aufnimmt und auf der Austrittsseite der Schneidplatte 5 offen ist.

Wie insbesondere auch in den Fig. 4, 8 und 10 ersichtlich ist, sind die Führungsplatten 7a, 7b des Basisteils 1 im gezeigten Ausführungsbeispiel parallel zueinander angeordnet, wobei sie in ihrem jeweiligen zentralen Bereich einen Durchbruch für den Bewegungsweg der Kolben-Zylindereinheit 6 aufweisen. An den voneinander abgewandten Außenseiten der beiden Führungsplatten 7a, 7b ist jeweils ein Kulissenrahmen 8a, 8b befestigt oder angeformt, die gemeinsam eine Kulissenführung 8 bilden. Zwischen den beiden Führungsplatten 7a, 7b ist die Schneidplatte 5 um eine erste, zur Schneidplatte 5 senkrechte Schwenkachse S₁ am Basisteil 1 schwenkbar angeordnet. Im Nahbereich der ersten Schwenkachse S₁ ist ein Schwenklager der Kolben-Zylindereinheit 6 mit einer zweiten Schwenkachse S₂ angeordnet, die zur ersten Schwenkachse S₁ parallel ist. Die Längsachse der Kolben-Zylindereinheit 6 verläuft im Wesentlichen entlang einer der Schneide 10 abgewandten, rückwärtigen Randkante der Schneidplatte 5. Im gezeigten Ausführungsbeispiel ist die Schneidplatte 5 so ausgeführt, dass die Schneide 10 und die rückwärtige Randkante in einem spitzen Winkel zueinander verlaufen, dessen Scheitel im Bereich der ersten Schwenkachse S₁ liegt, und in ihren der ersten Schwenkachse S₁ abgewandten Bereichen über eine bogenförmige Randkante ineinander übergehen. Die Schneidplatte 5 verfügt daher über ein annähernd kreissektorförmiges Aussehen.

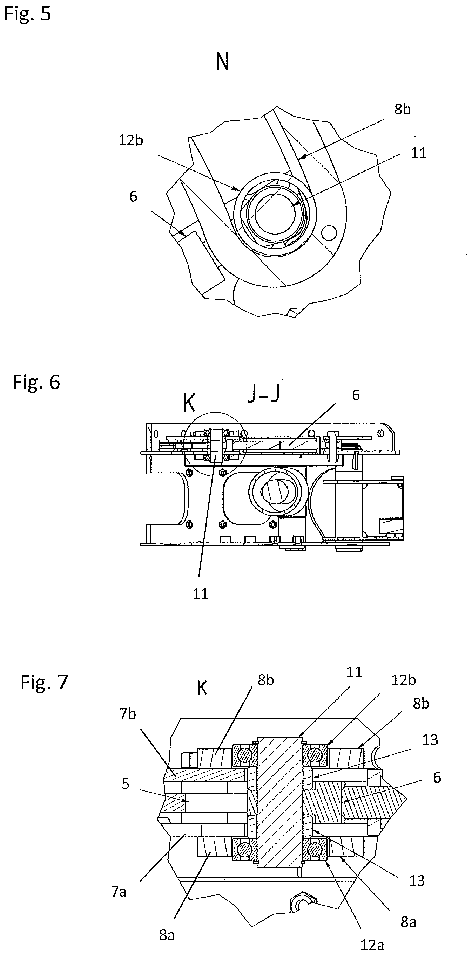

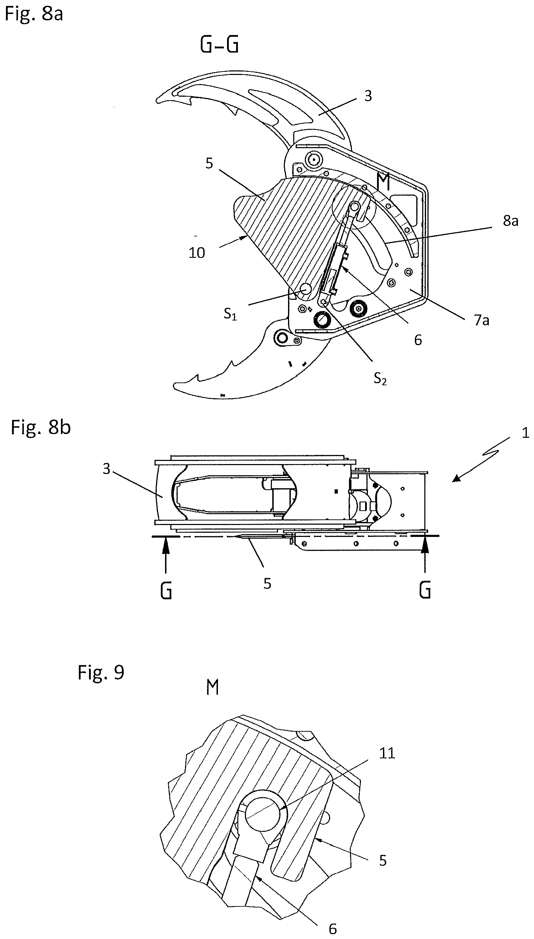

Die Kolben-Zylindereinheit 6 ist mit ihrem Zylinder am Schwenklager mit der zweiten Schwenkachse S₂ am Basisteil 1 angelenkt. Der Zylinder verläuft wie erwähnt im Wesentlichen entlang einer der Schneide 10 abgewandten, rückwärtigen Randkante der Schneidplatte 5 und weist eine Kolbenstange auf, die an ihrem freien Ende mit einem Mitnehmerbolzen 11 versehen ist. Der Mitnehmerbolzen 11 ist mit seiner Längsachse senkrecht zur Schneidplatte 5 orientiert und greift in einen hakenförmigen Fortsatz der Schneidplatte 5 ein (siehe Fig. 8a und 9), der so ausgeführt ist, dass bei einer Ausstell- oder Rückstellbewegung der Kolbenstange die lineare Stellbewegung der Kolbenstange in eine Schwenkbewegung der Schneidplatte 5 um die erste Schwenkachse S₁ umgesetzt wird. Dabei wird der Mitnehmerbolzen 11 von der Kulissenführung 8 geführt, in der der Mitnehmerbolzen 11 mittels zweier endseitig des Mitnehmerbolzens 11 angeordneter Kugellager 12a, 12b gelagert ist. Der Mitnehmerbolzen 11 ist somit an seinen beiden Enden über die Kugellager 12a, 12b in den beiden äußeren Kulissenrahmen 8a, 8b der Kulissenführung 8 geführt und durchdringt in seinem zentralen Bereich die lichte Öffnung des hakenförmigen Fortsatzes der Schneidplatte 5, wo auch die Kolbenstange der Kolben-Zylindereinheit befestigt ist, wie etwa der Fig. 6 und der Fig. 7 entnommen werden kann.

In der inaktiven Stellung der Schneidplatte 5 befindet sich der Mitnehmerbolzen 11 in einem der zweiten Schwenkachse S₂ zugewandten Endabschnitt der Kulissenführung 8, wie in den Fig. 4-7 ersichtlich ist. Die Schneidplatte 5 befindet sich in ihrer eingezogenen Stellung und wird mithilfe der Kolben-Zylindereinheit 6 in dieser Position gehalten.

Durch Betätigung der Kolben-Zylindereinheit 6 und einer Ausstellbewegung ihrer Kolbenstange wird der Mitnehmerbolzen 11 in Richtung des der zweiten Schwenkachse S₂ abgewandten Endabschnittes der Kulissenführung 8 bewegt, wobei der Mitnehmerbolzen 11 über die beiden Kugellager 12a, 12b entlang der entsprechenden Kurvenführungsbahnen der Kulissenführung 8 abrollt. Diese Ausstellbewegung wird in eine Schwenkbewegung der Schneidplatte 5 um die erste Schwenkachse S₁ umgesetzt und ist aufgrund der verwendeten Kugellager 12a, 12b sehr leichtgängig, sodass die Kolben-Zylindereinheit 6 entsprechend klein dimensioniert werden kann.

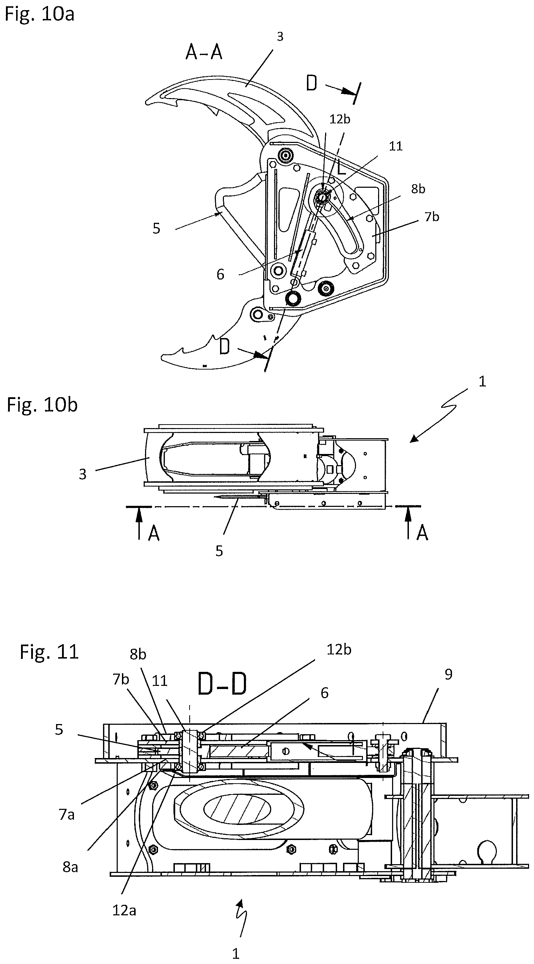

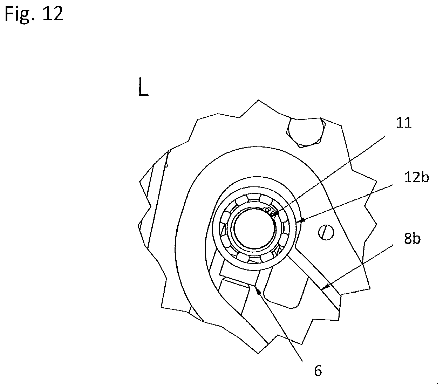

Am Ende der Ausstellbewegung der Kolbenstange erreicht die Schneidplatte 5 schließlich ihre aktive Stellung, in der die Schneide 10 in den von den Greiferarmen 2, 3 umschlossenen Aufnahmeraum ragt, wie in der Fig. 8a und Fig. 10a ersichtlich ist. An ihrem der zweiten Schwenkachse S₂ abgewandten Endabschnitt weist die Kulissenführung 8 einen im Vergleich zu ihrem der zweiten Schwenkachse S₂ zugewandten Endabschnitt erweiterten lichten Querschnitt auf (siehe insbesondere Fig. 12), der in einer senkrecht zu den Führungsplatten 7a, 7b orientierten Sichtrichtung von den Führungsplatten 7a, 7b gequert wird. Diese querenden Randkanten verengen in einer senkrecht zu den Führungsplatten 7a, 7b orientierten Sichtrichtung den erweiterten lichten Querschnitt der Kulissenrahmen 8a, 8b und bilden das Widerlager für den Mitnehmerbolzen 11. Sobald der Mitnehmerbolzen 11 den der zweiten Schwenkachse S₂ abgewandten Endabschnitt der Kulissenführung 8 erreicht, kommt er mit seinem Bolzenmantel zur Anlage mit diesen querenden Randkanten der Führungsplatten 7a, 7b, wie in den Fig. 8-12 ersichtlich ist, wobei hierfür auch Distanzringe 13 vorgesehen sein können, die insbesondere in der Fig. 11 ersichtlich sind. Die den erweiterten lichten Querschnitt der Kulissenführung 8 querenden Randkanten der Führungsplatten 7a, 7b bilden in dieser aktiven Stellung der Schneidplatte 5 das Widerlager für den Mitnehmerbolzen 11, über das in der Schneidplattenebene wirkende Kräfte in den Basisteil 1 abgeleitet werden können. Der in diesem Endabschnitt erweiterte lichte Querschnitt der Kulissenführung 8 stellt dabei sicher, dass die Kugellager 12a, 12b freigestellt sind, also nicht an der führenden Kurvenbahn der Kulissenführung 8 anliegen. Die Kugellager 12a, 12b werden somit bei Belastung der Schneidplatte 5 vollkommen entlastet und unterliegen damit keiner Abnutzung. Restkräfte der Belastung werden über das Schwenklager für die erste Schwenkachse der Schneidplatte 5 abgeführt, die aber klein sind. Der Großteil der Belastungen auf die Schneidplatte 5 wirkt als ein um die erste Schwenkachse wirkendes Drehmoment, das vom Mitnehmerbolzen 11 und seine direkte Anlage auf das Widerlager des Basisteils 1 abgeführt wird.

Es ist somit unmittelbar ersichtlich, dass bei dem erfindungsgemäßen Greifer die Belastbarkeit der Schneideinrichtung erhöht und ihr Verschleiß entsprechend verringert werden, wobei der Greifer dennoch kompakt ausgeführt werden kann. Dadurch kann auch eine Nachrüstbarkeit der Schneideinrichtung für einen Greifer verwirklicht werden.

## Patentansprüche

1. Greifer mit zumindest zwei zangenartig an einem Basisteil (1) relativ zueinander beweglich angeordnete Greiferarme (2, 3) und einer Schneideinrichtung für Schnittgut zur Befestigung an einer Arbeitsmaschine, wobei die Schneideinrichtung von einer Schneidplatte (5) gebildet wird, die mithilfe einer Kolben-Zylindereinheit (6) von einer aktiven Stellung, in der die Schneidplatte (5) in einen von den Greiferarmen (2, 3) umschlossenen Aufnahmeraum für das Schnittgut ragt, in eine inaktive Stellung, in der die Schneidplatte (5) im Basisteil (1) eingezogen ist, bewegbar ist, wobei die Schneidplatte (5) um eine erste, zur Schneidplatte (5) senkrechte Schwenkachse (S₁) am Basisteil (1) schwenkbar gelagert ist, und der Zylinder der Kolben-Zylindereinheit (6) um eine zweite, zur ersten Schwenkachse (S₁) parallelen Schwenkachse (S₂) schwenkbar am Basisteil (1) gelagert ist, **dadurch gekennzeichnet, dass** die ein- und ausfahrbare Kolbenstange der Kolben-Zylindereinheit (6) mit der Schneidplatte (5) über einen Mitnehmerbolzen (11) verbunden ist, der in der aktiven Stellung der Schneidplatte (5) bei Belastung der Schneidplatte (5) an einem Widerlager des Basisteils (1) anliegt, wobei der Mitnehmerbolzen (11) über Kugellager (12) in einer Kulissenführung (8) des Basisteils (1) geführt ist, deren lichter Querschnitt sich im Bereich des Widerlagers zur Sicherstellung einer Beabstandung der Kugellager (12) von der führenden Kurvenbahn der Kulissenführung (8) bei Anlage des Mitnehmerbolzens (11) am Widerlager erweitert.

2. Greifer nach Anspruch 1, **dadurch gekennzeichnet, dass** die Schneidplatte (5) zwischen zwei Führungsplatten (7a, 7b) des Basisteils (1) angeordnet ist, die zwei einander zugewandte, parallele Führungsebenen für die Schneidplatte (5) definieren, wobei die Führungsplatten (7a, 7b) in ihrem jeweiligen zentralen Bereich einen Durchbruch für den Bewegungsweg der Kolben-Zylindereinheit (6) aufweisen.

3. Greifer nach Anspruch 2, **dadurch gekennzeichnet, dass** die Kulissenführung (8) mittels zweier Kulissenrahmen (8a, 8b) gebildet wird, die jeweils an einer der beiden Führungsplatten (7a, 7b) übereinander liegend befestigt oder angeformt sind und jeweils einen Endabschnitt mit erweitertem lichten Querschnitt aufweisen, wobei das Widerlager durch Randkanten der Führungsplatten (7a, 7b) gebildet wird, die in einer senkrecht zu den Führungsplatten (7a, 7b) orientierten Sichtrichtung den erweiterten lichten Querschnitt der Kulissenrahmen (8a, 8b) verengen.

4. Greifer nach einem der Ansprüche 1 bis 3, **dadurch gekennzeichnet, dass** die dem Aufnahmeraum zugewandte Schneide (10) der Schneidplatte (5) und eine rückwärtige Randkante der Schneidplatte (5) in einem spitzen Winkel zueinander verlaufen, dessen Scheitel im Bereich der ersten Schwenkachse (S₁) liegt, und in ihren der ersten Schwenkachse (S₁) abgewandten Bereichen über eine bogenförmige Randkante ineinander übergehen.

5. Greifer nach Anspruch 4, **dadurch gekennzeichnet, dass** die Längsachse der Kolben-Zylindereinheit (6) im Wesentlichen parallel zur rückwärtigen Randkante der Schneidplatte (5) verläuft.

6. Greifer nach einem der Ansprüche 1 bis 5, **dadurch gekennzeichnet, dass** der Mitnehmerbolzen (11) an einem freien Ende der Kolbenstange der Kolben-Zylindereinheit (6) befestigt ist, wobei der Mitnehmerbolzen (11) mit seiner Längsachse senkrecht zur Schneidplatte (5) orientiert ist und in einen hakenförmigen Fortsatz der Schneidplatte (5) eingreift.

7. Greifer nach einem der Ansprüche 1 bis 6, **dadurch gekennzeichnet, dass** die Schneideinrichtung als Nachrüstteil des Greifers ausgeführt ist.

8. Arbeitsmaschine mit einem Greifer nach einem der Ansprüche 1 bis 7.

## Claims

1. Gripper having at least two gripper arms (2, 3) arranged in a pincer-like manner on a base part (1) so as to be movable relative to one another and a cutting device for material to be cut for attachment to a processing machine, wherein the cutting device is formed by a cutting plate (5) which can be moved with the aid of a piston-cylinder unit (6) from an active position, in which the cutting plate (5) projects into a receiving space for the material to be cut enclosed by the gripper arms (2, 3), into an inactive position, in which the cutting plate (5) is retracted in the base part (1), wherein the cutting plate (5) is pivotably mounted on the base part (1) about a first pivot axis (S₁) perpendicular to the cutting plate (5), and the cylinder of the piston-cylinder unit (6) is pivotably mounted on the base part (1) about a second pivot axis (S₂) parallel to the first pivot axis (S₁), **characterized in that** the retractable and extendable piston rod of the piston-cylinder unit (6) is connected to the cutting plate (5) via a driver pin (11) which, in the active position of the cutting plate (5), rests against an abutment of the base part (1) when the cutting plate (5) is loaded, wherein the driver pin (11) is guided via ball bearings (12) in a link guide (8) of the base part (1), the clear cross-section of which widens in the region of the abutment to ensure a spacing of the ball bearings (12) from the leading cam track of the link guide (8) when the driver pin (11) rests against the abutment.

2. Gripper according to claim 1, **characterized in that** the cutting plate (5) is arranged between two guide plates (7a, 7b) of the base part (1), which define two mutually facing, parallel guide planes for the cutting plate (5), wherein the guide plates (7a, 7b) comprise an opening in their respective central region for the movement path of the piston-cylinder unit (6).

3. Gripper according to claim 2, **characterized in that** the link guide (8) is formed by means of two link frames (8a, 8b) which are each fastened or formed on one of the two guide plates (7a, 7b) lying one above the other and each have an end section with an enlarged clear cross-section, wherein the abutment is formed by marginal edges of the guide plates (7a, 7b) which, in a viewing direction oriented perpendicularly to the guide plates (7a, 7b), narrow the widened clear cross-section of the link frames (8a, 8b).

4. Gripper according to one of the claims 1 to 3, **characterized in that** the cutting edge (10) of the cutting plate (5) facing the receiving space and a rear marginal edge of the cutting plate (5) extend at an acute angle to one another, the apex of which lies in the region of the first pivot axis (S₁), and merge into one another in their regions facing away from the first pivot axis (S₁) via an arcuate edge.

5. Gripper according to claim 4, **characterized in that** the longitudinal axis of the piston-cylinder unit (6) is substantially parallel to the rear marginal edge of the cutting plate (5).

6. Gripper according to one of claims 1 to 5, **characterized in that** the driver pin (11) is fixed to a free end of the piston rod of the piston-cylinder unit (6), wherein the driver pin (11) is oriented with its longitudinal axis perpendicular to the cutting plate (5) and engages a hook-shaped extension of the cutting plate (5).

7. Gripper according to one of claims 1 to 6, **characterized in that** the cutting device is designed as a retrofit part of the gripper.

8. Processing machine comprising a gripper according to one of claims 1 to 7.

## Revendications

1. Grappin avec au moins deux bras de grappin (2, 3) disposés à la manière d'une pince sur une partie de base (1) avec possibilité de mouvement l'un vers l'autre et avec un dispositif de coupe pour une matière à couper, à fixer sur un engin de travail, dans lequel le dispositif de coupe est formé par une plaque de coupe (5) qui peut être déplacée par une unité de vérin (6) d'une position active dans laquelle la plaque de coupe (5) dépasse dans un espace de réception de la matière à couper renfermé par les bras de grappin (2, 3), à une position inactive dans laquelle la plaque de coupe (5) est rétractée dans la partie de base (1), dans lequel la plaque de coupe (5) est supportée sur la partie de base (1) avec possibilité de pivoter autour d'un premier axe de pivotement (S₁) perpendiculaire à la plaque de coupe (5) et le cylindre de l'unité de vérin (6) est supporté sur la partie de base (1) de façon pivotante autour d'un deuxième axe de pivotement (S₂) parallèle au premier axe de pivotement (S₁), **caractérisé en ce que** la tige de piston rétractable et extensible de l'unité de vérin (6) est reliée avec la plaque de coupe (5) par un boulon d'entraînement (11) qui repose sur un contre-appui de la partie de base (1) dans la position active de la plaque de coupe (5) quand la plaque de coupe (5) est en charge, le boulon d'entraînement (11) étant guidé par l'intermédiaire de roulements à billes (12) dans une glissière de guidage (8) de la partie de base (1), dont la section libre s'élargit au niveau du contre-appui afin de maintenir une distance entre les roulements à billes (12) et la piste de guidage incurvée de la glissière de guidage (8) quand le boulon d'entraînement (11) vient reposer sur le contre-appui.

2. Grappin selon la revendication 1, **caractérisé en ce que** la plaque de coupe (5) est disposée entre deux plaques de guidage (7a, 7b) de la partie de base (1) qui définissent deux plans de guidage tournés l'un vers l'autre et parallèles pour la plaque de coupe (5), les plaques de guidage (7a, 7b) présentant, dans leur partie centrale, une ouverture pour la course de mouvement de l'unité de vérin (6).

3. Grappin selon la revendication 2, **caractérisé en ce que** la glissière de guidage (8) est formée au moyen de deux cadres de glissière (8a, 8b) qui sont fixés ou formés chacun sur l'une des deux plaques de guidage (7a, 7b) l'un au-dessus de l'autre et qui présentent chacun une partie d'extrémité avec une section libre élargie, le contre-appui étant formé par des arêtes de bord des plaques de guidage (7a, 7b) qui réduisent la section libre élargie des cadres de glissière (8a, 8b) dans une direction du regard orientée perpendiculairement aux plaques de guidage (7a, 7b).

4. Grappin selon l'une des revendications 1 à 3, **caractérisé en ce que** le tranchant (10) de la plaque de coupe (5) tourné vers l'espace de réception et une arête de bord arrière de la plaque de coupe (5) forment l'un avec l'autre un angle aigu dont le sommet se situe au niveau du premier axe de pivotement (S₁) et se font suite l'un à l'autre sur une arête de bord en arc de cercle dans leurs régions orientées à l'opposé du premier axe de pivotement (S₁).

5. Grappin selon la revendication 4, **caractérisé en ce que** l'axe longitudinal de l'unité de vérin (6) est sensiblement parallèle à l'arête de bord arrière de la plaque de coupe (5).

6. Grappin selon l'une des revendications 1 à 5, **caractérisé en ce que** le boulon d'entraînement (11) est fixé à une extrémité libre de la tige de piston de l'unité de vérin (6), le boulon d'entraînement (11) étant orienté perpendiculairement à la plaque de coupe (5) sur son axe longitudinal et se mettant en prise dans une saillie en forme de crochet de la plaque de coupe (5).

7. Grappin selon l'une des revendications 1 à 6, **caractérisé en ce que** le dispositif de coupe est réalisé comme une pièce pouvant être installée après coup sur le grappin.

8. Engin de travail muni d'un grappin selon l'une des revendications 1 à 7.
